# EUROPEAN PATENT APPLICATION

(11) **EP 4 826 620 A2**
(43) Date of publication of application: **21.10.2026**
(21) Application number: 26194363.3
(22) Date of filing: 24.07.2026
(51) Int. Cl.: G06Q 10/0833, A45C 13/42

(54) **LUGGAGE TAG, MANUFACTURING METHOD AND METHODS FOR USING THE TAG**

(71) Applicant: Travel Sentry Holding Sàrl, 1260 Nyon (CH)
(72) Inventor: VERMILYE, John Ware, 1260 Nyon (CH)
(74) Representative: Kraus & Lederer PartGmbB

(57) **Abstract**

The present invention relates to luggage tags (1000, 2000), their manufacturing (3000) and methods for checking in (6000), tracking (8000), and returning (9000) a luggage of a user. The method for manufacturing comprises generating (3100) an alphanumerical code (1200) for the luggage tag (1000, 2000), associating (3200) the alphanumerical code (1200) with a transponder ID, TID, stored in a non-erasable manner on the luggage tag (1000, 2000), and storing (3300) the alphanumerical code (1200) and the associated transponder ID, TID, on a server (4200).

## Description

The present invention relates to the field of luggage tags, their manufacturing and methods for checking in, tracking, and returning a luggage of a user, preferably by using radio frequency identification tags.

### Background of the invention

Currently baggage or luggage for airline travel is issued a baggage tag during a check-in linked to the passenger's airline flight reservation. Typically, the airline baggage tag is an adhesive label wrapped around a handle of a suitcase at the check-in counter or at a self-service kiosk. The baggage tag is used to direct the baggage to the correct flight and loading position.

Airline baggage tags currently comprise a 10-digit tag number represented by a barcode along with human-readable information including the flight number, date and destination airport code. Some of these barcode baggage tags now also have a radio-frequency identification, RFID, inlay into which the 10-digit tag number and sometimes additional information, such as the flight number, date or destination airport code, are encoded on the RFID chip.

Automated baggage handling systems can identify the flight number, date and destination airport code by looking up the 10-digit tag number in a computing system. The 10-digit tag number and other information printed on the tag can be used to identify the owner of unclaimed baggage.

One drawback of the 10-digit tag number is that it is only valid for one journey. This, together with the low amount of codes available and the manner in which those codes are shared among airlines, can lead to the same 10-digit tag number being used two or more times by larger airlines within very short timeframes, such as within a 48-hour period. This ambiguity makes luggage tracking complex and less reliable.

The airline baggage tag can include an RFID "inlay" which comprises the RFID chip attached to an antenna, often metal foil and an adhesive backing or substrate. This means in some airports the baggage tag can be read automatically in the baggage handling system by a barcode scanner or an RFID reader. The read rate, that is, successful reads, of RFID is usually >99%, whereas the read rate for barcode tags is lower due to line-of-sight issues.

It is therefore an object of the invention to provide a luggage tag for a luggage which can improve on at least some of the limitations indicated above, to enable reuse of the baggage tag for multiple journeys, reduce the overall waste production and enable reading and writing to the luggage tag using RFID which is more reliable.

### Summary of the invention

The above-mentioned problems are solved by the invention, which is defined by the claims.

An embodiment can relate to a method for manufacturing a luggage tag for tracking luggage of a user, the luggage tag having a wireless-readable tag. The method comprises generating an alphanumerical code for the luggage tag, associating the alphanumerical code with a transponder ID, TID, stored in a non-erasable manner on the luggage tag, and storing the alphanumerical code and the associated transponder ID, TID, on a server.

In some embodiments, the method further includes printing the alphanumerical code on the luggage tag.

In some embodiments, the method further comprises storing the alphanumerical code in a memory of the luggage tag.

In some embodiments, the method further comprises checking whether the alphanumerical code and/or the associated transponder ID, TID, are already stored on the server.

In some embodiments, the alphanumerical code depicted on the luggage tag comprises a first part and a second part, the first part comprises at least four characters, preferably at least five characters, even more preferably at least six characters, the second part comprises at most six characters, preferably at most five characters, even more preferably at most four characters.

In some embodiments, each character is one of a digit from 2 to 9, or the letters B,C,D,F,G,H,J,K,L,M,N,P,Q,R,S,T,W,X,Y,Z.

In some embodiments, the method further comprises implementing attaching means configured to enable a connection between the luggage tag and a luggage.

In some embodiments, the method further comprises implementing the luggage tag as an integral part of the luggage.

In some embodiments, the method further comprises storing information related to a model of the luggage in association with the alphanumerical code and/or the associated transponder ID, TID, on the server.

In some embodiments, the information related to the model of the luggage is a picture of the luggage.

In some embodiments, generating the alphanumerical code comprises applying a format-preserving encryption to a sequential input value using a symmetric key, such that the alphanumerical code does not reveal a position of the sequential input value in a sequence of input values.

In some embodiments, the method further comprises registering the luggage tag by the user, such that contact information of the user is associated with the alphanumerical code.

In some embodiments, the method further comprises storing the contact information of the user and the associated alphanumerical code in a local server.

In some embodiments, the step of registering further comprises providing the alphanumerical code, checking whether the provided alphanumerical code has been previously registered, if it is determined that the alphanumerical code has not been previously registered, providing the contact information, identifying (3940) the local server based on the contact information.

In some embodiments, the method further comprises, the contact information comprises at least one of the following: a name, a phone number, an e-mail address, a WhatsApp number, a WeChat contact.

A further embodiment can relate to a method for checking in luggage for a flight. The method comprises manufacturing a luggage tag according to any one of the above embodiments, entering the alphanumerical code in a user interface provided by an airline, storing the alphanumerical code together with passenger information on an airline server.

In some embodiments, the alphanumerical code is entered in the user interface manually by the user.

In some embodiments, the alphanumerical code is entered in the user interface by optically scanning a graphical-code version of the alphanumerical code.

In some embodiments, the alphanumerical code is entered in the user interface by wireless scanning of the wireless-readable tag.

A further embodiment can relate to a method for tracking luggage for a flight. The method (8000) comprises manufacturing the luggage tag according to any one of the above embodiments, attaching the luggage tag to the luggage of the user, tracking a location of the luggage by wireless scanning of the wireless-readable tag, storing the location of the luggage in an airline server.

In some embodiments, the luggage is tracked along one or more checkpoints during an airflight of the user, wherein each one of the one or more checkpoints comprises a wireless reader that scans the wireless-readable tag of the luggage tag attached to the luggage.

In some embodiments, the one or more checkpoints comprise at least one of the following: checking-in the luggage, loading the luggage on an airplane, unloading the luggage off an airplane, delivering the luggage to a luggage claim area.

A further embodiment can relate to a method for identifying an owner of a luggage. The method comprises manufacturing the luggage tag according to any one of the above embodiments, retrieving the contact information associated with the luggage tag, contacting the owner based on the contact information.

A further embodiment can relate to a luggage tag manufactured according to any one of the above embodiments.

In some embodiments, the luggage tag further includes a screen, wherein the screen is configured to depict the alphanumerical code and/or information concerning a flight.

In some embodiments, the screen is an e-ink screen.

In some embodiments, the wireless-readable tag is an RFID compatible tag.

In some embodiments, the wireless-readable tag is an NFC and a RFID compatible tag.

### Brief description of the drawings

Figure 1 schematically illustrates a luggage tag 1000,
Figure 2 schematically illustrates a luggage tag 2000 with a screen 1500,
Figure 3 schematically illustrates a method 3000 for manufacturing a luggage tag,
Figures 4A-C schematically illustrate a procedure for associating an alphanumerical code with a transponder ID, TID.
Figure 5 schematically illustrates a registration procedure,
Figure 6 schematically illustrates a method 6000 for checking in luggage for a flight,
Figure 7 schematically illustrates communication while checking in luggage,
Figure 8 schematically illustrates a method 8000 for tracking luggage for a flight,
Figure 9 schematically illustrates communication during tracking luggage,
Figure 10 schematically illustrates a method 9000 for identifying an owner of a luggage,
Figure 11 schematically illustrates communication for found luggage.

### Detailed description of preferred embodiments

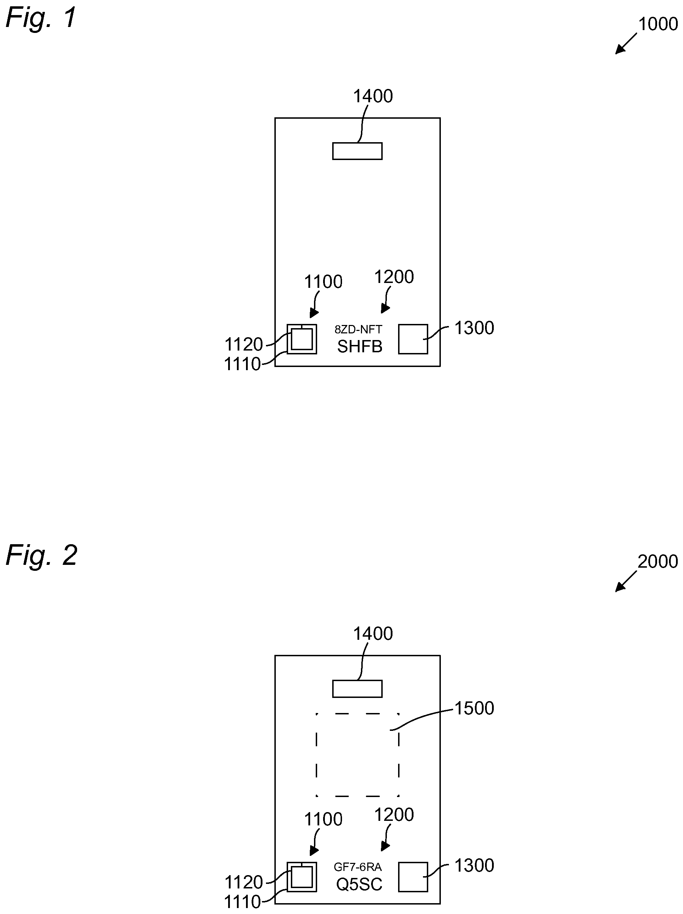

Figure 1 schematically illustrates a luggage tag 1000. The luggage tag 1000 may be a luggage tag for tracking the luggage of a user. The luggage tag may be manufactured according to the method as disclosed herein. The luggage tag 1000 comprises a wireless-readable tag 1100. The wireless-readable tag 1100 comprises a microchip 1120 and an antenna 1110. The wireless-readable tag 1100 may be a radio-frequency identification, RFID, compatible tag, a near-field communication, NFC, compatible tag, and/or, an RFID compatible tag. Further, the luggage tag 1100 may comprise two or more wireless-readable tags, one RFID compatible and the other NFC compatible. RFID and NFC operate in different frequency bands: the RFID compatible tag typically operates in an ultra-high frequency, UHF, band suited to airport baggage-handling infrastructure, while the NFC compatible tag typically operates in a high frequency, HF, band suited to short-range reading by a smartphone. The wireless-readable tag 1100 may thus be a dual-frequency tag combining a UHF RFID antenna/protocol and an HF NFC antenna/protocol, so that it can be read both by airport RFID infrastructure and by consumer NFC-enabled devices. The antenna 1110 is configured to transmit and receive data and the microchip 1120 is configured to store data. For example, an alphanumerical code 1200 may be stored in a memory luggage tag 1000, for instance in the memory of the microchip 1120. The wireless-readable tag 1100 may be scanned and read by a wireless reader such as, for instance, an RFID-enabled device or an NFC-enabled device. The read rate of RFID is usually >99%, whereas the read rate for barcode tags is lower due to line-of-sight issues. Thus, the wireless-readable tag 1100 enables more reliable reading of the luggage tag 1000, thereby allowing for faster handling and sorting of the luggage.

The luggage tag 1000 further comprises an alphanumerical code 1200. An alphanumerical code may refer to a code comprising digits and letters of the alphabet. Each luggage tag 1000 may have a unique alphanumerical code, such that the luggage tag can be used for multiple journeys. The alphanumerical code 1200 can be used to identify the luggage tag 1000 and therefore the luggage to which the luggage tag 1000 is attached. Thus, the alphanumerical code 1200 may also be called luggage or baggage ID, BID. The alphanumerical code 1200 may be printed on the luggage tag 1000. The alphanumerical code 1200 may be printed in clear form and/or as a graphical code, such as a QR code. The printing has the advantage that the alphanumerical code 1200 can still be used to identify the luggage tag 1000 even if the electronics of the luggage tag 1000, for instance the wireless-readable tag 1100, are damaged. Further, thanks to the printed alphanumerical code 1200, the luggage tag 1000 can still be identified in an environment without RFID/NFC infrastructure, for instance the luggage tag 1000 can still be used for manual baggage handling or at older airports without RFID/NFC infrastructure. Further, the printed alphanumerical code 1200 can be captured by conventional means beyond RFID/NFC reading, for instance visually by a person, or by camera or by optical character recognition, OCR, broadening the range of compatible identification methods without requiring any change to the luggage tag electronics.

Additionally, the alphanumerical code 1200 may be stored in a memory of the luggage tag 1000, so that the alphanumerical code can be retrieved electronically without line-of-sight and remains readable if the print becomes worn. The alphanumerical code 1200 may be stored in a non-erasable manner or non-changeable manner on the luggage tag 1000. For example, the alphanumerical code 1200 may be stored in a non-erasable or non-changeable manner in the memory of the luggage tag or on the microchip 1120 of the wireless-readable tag 1100. Based on the stored alphanumerical code, the luggage can be handled during a baggage handling process in connection with an airflight of the user or owner of the luggage tag 1000. For example, the wireless-readable tag 1100 may be read with one or more wireless readers during baggage handling to obtain the alphanumerical code stored in the memory of the luggage tag 1000. Then, the luggage may be sorted in accordance with sorting information, for instance a flight number, a date, or a destination airport code, associated with the alphanumerical code. In other words, the alphanumerical code 1200 may be used for sorting and tracking the luggage of user. Additionally, a transponder ID, TID, may be stored in a non-erasable manner on the luggage tag 1000. Each luggage tag 1000 may comprise a unique TID. In principle, the TID can also be used for tracking the luggage, but the alphanumerical code 1200 is preferred because it is more readable and comprises fewer characters. For example, the TID may comprise more than 16 characters, whereas the alphanumerical code may comprise 10 characters. The TID is generated by the chip manufacturer. The chip manufacturer might differ from the tag manufacturer, although this is not necessary. If different, the tag manufacturer can include the chip with a given TID into the tag. By using the alphanumerical code stored in the memory of the luggage tag 1000, the luggage tag 1000 can be read automatically, and the luggage associated with the luggage tag 1000 can be sorted more reliably than using the TID. Further, the luggage tag 1000 can be reused by a user for multiple flights without requiring a new baggage tag. Compared to the state-of-the-art License Plate Number, LPN, the alphanumerical code 1200 is not duplicated. Therefore, the alphanumerical code 1200 is not only valid for one journey but can be used for multiple journeys. Therefore, the luggage tag 1000 may be a permanent bag tag, PBT, or permanent luggage tag such that the luggage tag 1000 can be used permanently by a user throughout multiple flights or journeys. Thus, the luggage tag 1000, or PBT, is capable of replacing the currently used airline baggage tags comprising the 10-digit LPN number.

Further, the luggage tag 1000 may comprise a graphical-code version 1300 of the alphanumerical code 1200. The graphical-code version may be, for instance, a QR code which enables a user to quickly scan the QR code to thereby obtain the alphanumerical code 1200. For example, the QR code 1300 may be scanned by a mobile device to obtain the alphanumerical code 1200. Thanks to the graphical-code version 1300, the alphanumerical code 1200 can be easily and quickly transferred to mobile devices or other QR code readable devices without typing the alphanumerical code 1200 into the devices.

As shown in figure 1, the luggage tag 1000 depicts the alphanumerical code 1200 as "GF7-6RA Q5SC". In an example, the alphanumerical code 1200 depicted on the luggage tag 1000 comprises a first part and a second part, the first part in figure 1, namely "GF7-6RA", comprises six characters the second part, namely " Q5SC", four characters. Each character of the alphanumerical code 1200 may be one of a digit from 2 to 9 or one of the letters B,C,D,F,G,H,J,K,L,M,N,P,Q,R,S,T,W,X,Y,Z. For example, where nine characters are drawn from the 28-character alphabet, approximately 28⁹ unique combinations are available. In an embodiment, the first part comprises at least four characters, preferably at least five characters, and even more preferably at least six characters. Preferably, the first part is divided optically into two sub-parts when the alphanumerical code is printed. In an embodiment, the second part comprises at most six characters, preferably at most five characters, even more preferably at most four characters. This split of the alphanumerical code 1200 into a first part and a second part enables partial-code recognition without full-code lookup, allowing a user to identify the tag using only the short second part. Further, the short second part reduces user error in manual entry or verbal exchange. The short second part is easier to read aloud, remember momentarily, or key in correctly, for instance, over a phone, on a small screen, than the full code, lowering the chance of transcription errors. Further, the second part allows recognition of the luggage without the risk of confusion with another alphanumerical code. The second part of the alphanumerical code comprising 4-6 characters drawn from the letters mentioned above still yields a large number of combinations. Thus, using it as a quick, non-exhaustive check, for instance, "does this look like the right bag", has a low but non-zero chance of ambiguity. For example, the user can reliably recognize the luggage tag 1000 based on just the at last 4 characters of the second part of the code as the chances of a duplicate are 6,146,561 to 1. For example, the alphanumerical code 1200 may be printed with the first part and the second part arranged on separate lines, for instance with the first part comprising two groups of three characters separated by a hyphen on a first line and the second part on a second line therebelow, and/or with the second part printed in a larger font size than the first part, so as to visually emphasize the shorter, more easily recognizable second part on the luggage tag 1000, 2000.

Further, the luggage tag 1000 may comprise attaching means 1400 configured to enable a connection between the luggage tag 1000 and the luggage. The attaching means 1400 may be provided at an upper region of the luggage tag 1000. For example, the attaching means 1400 may be used to secure the luggage tag 1000 to a bag or luggage of the user. For example, the luggage tag 1000 may be secured or fixed to a bag with an elastic band through the attaching means 1400. The attaching means 1400 allows the luggage tag 1000 to be used with different pieces of luggage. Alternatively, the luggage tag 1000 may be implemented as an integral part of the luggage. This has the advantage of easily checking and transporting the luggage as the luggage tag 1000 remains at a fixed position with respect to the luggage. Further, full advantage of wireless technology can be enabled, and the luggage can be recovered more easily, since the luggage tag 1000 is unlikely to detach from the luggage.

Figure 2 schematically illustrates a luggage tag 2000. The luggage tag 2000 corresponds to the luggage tag 1000 of figure 1. The luggage tag 2000 additionally includes a screen 1500. The screen 1500 may be configured to depict the alphanumerical code 1200 and/or flight and/or passenger information. The screen 1500 is shown in dashed outline in a central region of the luggage tag 2000, above the alphanumerical code 1200. The screen 1500 may be a quadratic or rectangular. If the alphanumerical code 1200 is also stored in the memory of the luggage tag 2000, the screen 1500 can redisplay or reference the code without an external database lookup. Further, the screen 1500 may depict flight routing information of a bag or luggage on which the luggage tag 1000 is attached or priority information. Flight routing may be, for instance, an International Air Transport Association, IATA, airport code for a starting airport, a final destination airport or a connecting airport along with a date and corresponding flight numbers. The screen 1500 may also depict customs regulations in accordance with certain customs regulations of a country or region. For instance, the screen 1500 may depict green strips in parallel to the routing information to comply with European Union customs regulations to signal that the passenger has originated within an EU member state. Additionally, the screen 1500 may depict a barcode encoding a 10-digit code comprising information, for instance a baggage identification number referred to in the industry as the LPN along with the 10-digit code. The information concerning the flight depicted on the screen 1500 may not be intended to be used for sorting the bag or luggage on which the luggage tag 1000 is attached but for systems that still require the LPN such as, for instance, security screening or helping manually identify the luggage. For example, some airports may still require LPN which can be depicted by the screen 1500. In an embodiment, the screen 1500 may be an e-ink screen. An e-ink screen 1500 retains the depicted alphanumerical code 1200 and/or flight information without continuous power draw. The information concerning the flight depicted on the e-ink screen 1500 can be updated. For example, the information concerning the flight may be updated at the same time, and using the same energy, as the wireless-readable tag 1100 is read or encoded. Further, the screen 1500 may be encoded with an RFID or NFC enabled device. For instance, the screen 1500 may be RFID and/or NFC compatible such that the information on the screen 1500 may be changed by using a RFID and/or NFC enabled device. The RFID/NFC enabled encoding of the screen 1500 may be restricted by a key, such as a cryptographic key, such that the luggage tag 2000 may be encoded, for instance, only by an airline. The airline may provide the key to the user of the luggage tag 2000. For example, the airline may provide the key via an App or a website. The user may use a device capable or wireless communication, preferably NFC and or RFID communication, to encode the tag based on the key. For instance, the user may use an NFC-enabled smartphone to encode the luggage tag 2000 with information and/or to populate the screen 1500. Then, at the airport a status of the luggage tag 2000 may be updated to be active, for instance, at a baggage dropoff.

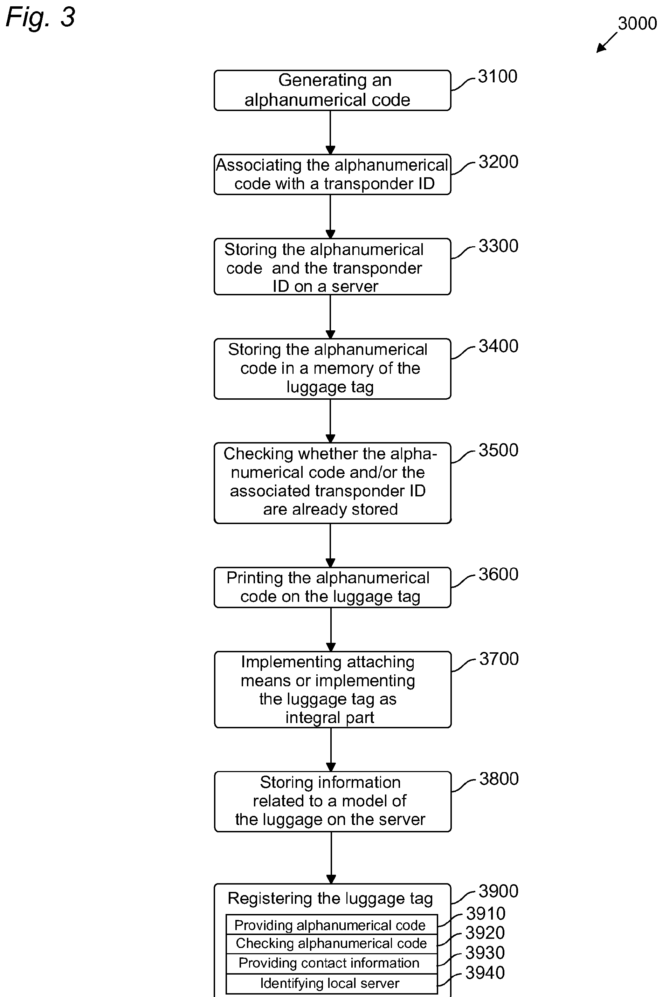

Figure 3 schematically illustrates a method 3000 for manufacturing a luggage tag for tracking luggage of a user, the luggage tag having a wireless-readable tag. For example, the method 3000 may be employed to manufacture the luggage tag 1000 of figure 1 or the luggage tag 2000 of figure 2.

At step 3100, an alphanumerical code is generated for the luggage tag. For example, at step 3100 the alphanumerical code 1200 of figure 1 or figure 2 may be generated. The alphanumerical code is then used as a public identifier of the luggage tag. For example, the alphanumerical code of the luggage tag may be used for tracking, sorting, handling and directing of the luggage. For example, the alphanumerical code may be used by an airline to handle the luggage. Further, the alphanumerical code can be made more readable than the TID generated by a chip manufacturer, which makes it more convenient to use the alphanumerical code for tracking and handling the luggage. Since the alphanumerical code 1200 is generated independently of the TID and does not itself derive from it, the luggage tag's user-facing identifier is decoupled from the underlying wireless-readable tag 1100 technology, so that the alphanumerical code 1200 can be optimized for human use, for instance kept short and easy to recognize, rather than being dictated by a data format of the chip hardware.

In an embodiment, generating the alphanumerical code may comprise applying a format-preserving encryption to a sequential input value using a symmetric key, such that the alphanumerical code does not reveal the position of the sequential input value in a sequence of input values. This avoids a random-number generator and its collision management: codes can be assigned in simple sequential order, batch-friendly and free of accidental duplication, while the output does not look sequential. Because consecutive inputs map to unrelated-looking outputs, a party holding one valid alphanumerical code cannot infer neighboring alphanumerical codes, defeating adjacency guessing before a guessed code even reaches the server-side check. Format preservation means the output already carries the required length and character set, so no reformatting or padding is needed before printing. Reversibility under the symmetric key lets the issuing entity recover the original sequential input for internal batch accounting or manufacturing audit, while a party without the key sees only a seemingly random value. This obfuscation of the sequential input value provides a layer of protection that is independent of, and additional to, the verification of the alphanumerical code 1200-TID pair on the server 4200: even should the symmetric key be compromised, obtaining a plausible-looking alphanumerical code 1200 alone does not render it valid, since validity may additionally require a corresponding stored pair on the server 4200 that has passed the uniqueness check. The format-preserving encryption may, for example, be implemented using a standardized format-preserving encryption mode operating on an approved symmetric block cipher, such as the FF1 mode specified in NIST Special Publication 800-38G, which is built on the Advanced Encryption Standard, AES, block cipher. Further, because the mapping between the sequential input value and the alphanumerical code 1200 is deterministic under the symmetric key, the issuing entity does not need to separately maintain a lookup table recording the sequence position of each issued alphanumerical code 1200, in addition to the alphanumerical code 1200-TID pairing table described with respect to step 3300.

In an embodiment, the alphanumerical code comprises a first part and a second part. The first part comprises at least four characters, preferably at least five characters, even more preferably at least six characters. The second part comprises at most six characters, preferably at most five characters, even more preferably at most four characters. Further, the alphanumerical code may comprise a checksum. A character of the checksum may be arranged at a fixed position of the alphanumerical code, for example at the third position, i.e. within the first part of the alphanumerical code. The character of the checksum is mathematically derived from all remaining characters of the alphanumerical code by a deterministic formula, such that the same remaining characters always yield the same checksum character. The checksum can thus be used to identify typos and a large portion, for instance approximately 90%, of random character sequences as invalid codes without querying the server and without scanning an entire database of alphanumerical codes. This reduces server load and gives the user immediate feedback on a mistyped code. Further, the character of the checksum may be selected from a character subset, for instance of 10 characters, which is smaller than the full character set, for instance of 28 characters, used for the remaining characters.

At step 3200, the alphanumerical code is associated with a transponder ID, TID. The TID is stored in a non-erasable manner on the luggage tag. For example, the TID may be stored in a memory of the wireless-readable tag. The one-to-one association between the alphanumerical code and the TID, performed once, avoids any ambiguity later about which TID belongs to which alphanumerical code. In other words, the alphanumerical code with the associated TID form a unique pair of codes. This supports reliable lookup and reduces false-positive/false-negative matches during a verification of the alphanumerical code. The TID is generated by a chip manufacturer, for instance, an RFID chip manufacturer. The TID may be checked that it includes a customer ID and an indicator used by the industry. Further, the alphanumerical code is generated independently from the TID. Therefore, the alphanumerical code-generation process can be reused across multiple manufacturers or chip batches, supporting a multi-sourcing supply chain. Using a separately generated alphanumerical code 1200, rather than the TID itself, as the luggage tag's public identifier further avoids exposing the wireless-readable tag's 1100 native hardware identifier to devices or parties reading the luggage tag 1000, 2000. This corresponds to an identifier scheme established in RFID/NFC deployments, in which each tag carries a simple identifier that is linked to additional information only in a secure backend database, rather than allowing readers to obtain the hardware-level identifier directly. Moreover, since the method does not rely on any proprietary security feature of the wireless-readable tag 1100 itself, for instance an on-chip cryptographic module, it can be implemented using standard passive RFID or NFC chips, which are markedly less costly than chips incorporating dedicated secure elements.

At step 3300, the method 3000 comprises storing the alphanumerical code and the associated transponder ID, TID, on a server. For example, the alphanumerical code and the associated transponder ID may be stored on a database of the server. Since the alphanumerical code and the associated TID are stored on a server, only a company having access to the server knows which alphanumerical code is associated with which TID. The alphanumerical code and the TID do not have a mathematical relationship, and it therefore is not possible to independently derive one from the other. The only way to find the TID corresponding to a given alphanumerical code, and vice versa, is to send a request to the server, which looks up the pair in the database of valid pairs. Further, since an alphanumerical code is stored with an associated TID, it can be used as evidence to demonstrate that a given luggage tag is genuine, for instance in a counterfeit dispute. The central storage of the code pairs scales to very large numbers of luggage tags - potentially billions of pairs between the alphanumerical code and the TID - and can further hold associated luggage details without the luggage tag itself carrying more than the alphanumerical code, keeping the luggage tag's data footprint minimal. Further, it can be quickly verified if a luggage tag has been cloned. If the alphanumerical code of the luggage tag is not stored on the server or does not have an associated TID or has a wrongly associated TID, it can be deduced that the luggage tag has been cloned by someone, in addition to verifying that the alphanumerical code 1200 and the TID form a stored pair. Because verification of the luggage tag's 1000, 2000 authenticity relies on the corresponding record in the database of the server 4200, rather than solely on the physical luggage tag 1000, 2000, a given alphanumerical code 1200 can also be revoked or invalidated by amending or removing its server-side record, without needing to physically recall or destroy the luggage tag 1000, 2000 itself. Further, since the server 4200 constitutes a single authoritative record of valid alphanumerical code 1200-TID pairs, it can be queried by multiple different downstream parties, for instance different airlines or lost-and-found service providers, for verification purposes, without each of those parties needing to separately maintain its own copy of the pairing data. The same stored pairing further enables verification of a luggage tag 1000, 2000 that is already in circulation: by reading both the alphanumerical code 1200 and the TID from the wireless-readable tag 1100 of a specific physical luggage tag 1000, 2000 and checking whether the read alphanumerical code 1200 and the read TID match the pair recorded for that alphanumerical code 1200 on the server 4200, a mismatch can be detected as an indication that the luggage tag 1000, 2000 is counterfeit or has been tampered with, independently of and in addition to the checks performed at manufacture.

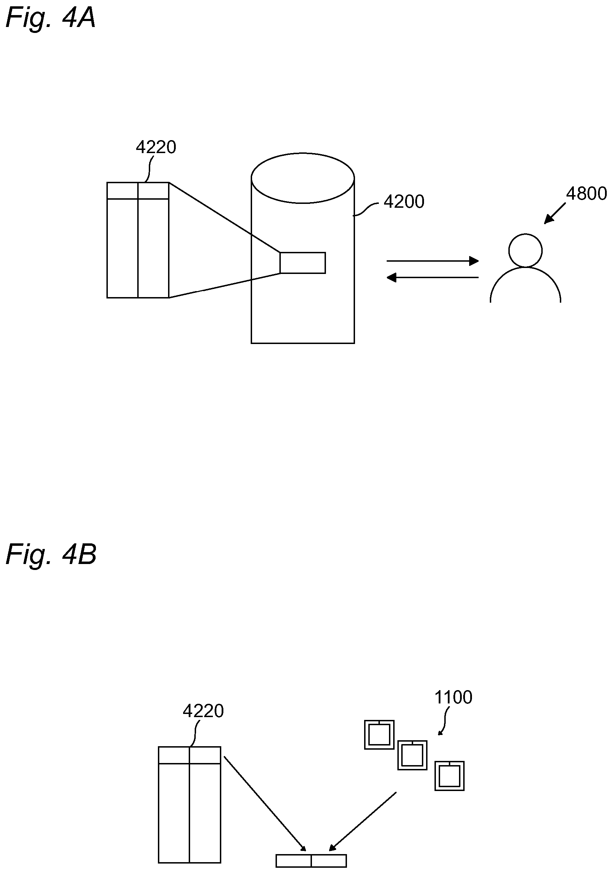

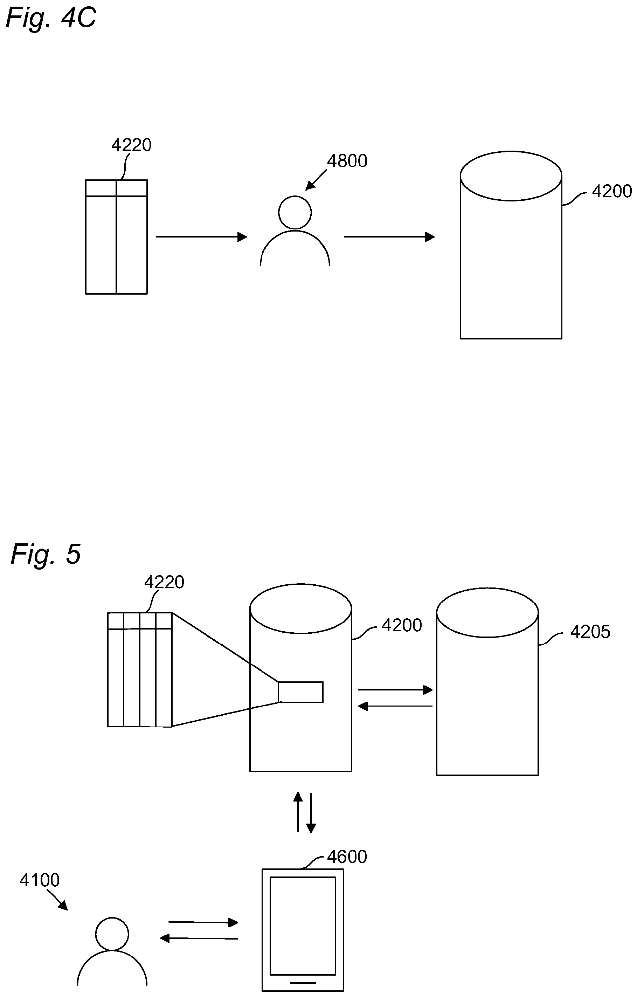

Figures 4A-C schematically illustrate the association of the alphanumerical code with a TID as mentioned at step 3200. First, in figure 4A, an administrator 4800 uses an administrative panel to generate a batch of alphanumerical codes. At this point, the alphanumerical codes are not valid, meaning that they are not yet associated with or paired with a TID. The list of alphanumerical codes may be stored in a file 4220 in a database of the server 4200. The file 4220 may be a comma-separated values, CSV, file comprising a column with the alphanumerical codes and an additional column for the TIDs to be inserted by the chip manufacturer. The administrator 4800 downloads the file 4220 with the generated alphanumerical codes and sends the file to a chip manufacturer. Then, as illustrated in figure 4B, the chip manufacturer writes the TID of each wireless-readable tag 1100 to the alphanumerical code in the file 4220 to thereby associate or pair the alphanumerical codes with the TID. As illustrated in figure 4C, the updated file 4220 comprising the alphanumerical codes and the associated TIDs are sent back to the administrator 4800 who stores the file 4220 on the server 4200. Then, a series of checks may be performed to check the validity of the alphanumerical codes with the associated TIDs. For example, the validity check may comprise at least one of the following checks: the uploaded file 4220 must not comprise two identical alphanumerical codes, the uploaded file 4220 must not comprise two identical TIDs, the uploaded file 4220 must not comprise alphanumerical codes that were not in the file 4220 provided to the RFID manufacturer. Additionally or alternatively, it may be checked whether the TID comprises a manufacturer identifier, a customer identifier and/or an industry-use indicator encoded in accordance with a standard, for instance an applicable ISO standard for transponder identification. This provides a further, independent check that a given wireless-readable tag 1100 was produced for use with the luggage tag 1000. Thus, the luggage tag is valid from the moment it leaves the factory and the alphanumerical code is stored with the associated TID on the server. The applicable ISO standard for transponder identification may, for example, be the standard referenced in IATA Recommended Practice RP1740c for radio-frequency identification of baggage. Additionally or alternatively, a batch of alphanumerical codes 1200 may be allocated in the database of the server 4200 to a specific licensed luggage brand or original equipment manufacturer, OEM, for instance corresponding to an order placed by that brand or OEM, such that it can be checked whether a given alphanumerical code 1200 is used by, or in luggage tags 1000, 2000 supplied to, the brand or OEM to which its batch was allocated; this allows over-production beyond a licensed order quantity, and production of counterfeit luggage tags 1000, 2000 using alphanumerical codes 1200 outside a licensed allocation, to be detected.

Referring again to figure 3: at step 3400, the method 3000 optionally comprises storing the alphanumerical code in a memory of the luggage tag. This enables electronic RFID/NFC reading of the alphanumerical code, not merely optical reading, so a reader can retrieve the alphanumerical code directly without a camera, OCR or a human. Thus, the alphanumerical code can be retrieved by, for instance, a RFID-scan used, for instance, during the self-check-in procedures or for tracking the luggage tag or during baggage handling. For example, a baggage handling system may capture the alphanumerical code at each checkpoint without a manual step, and the luggage may be sorted automatically in accordance with the alphanumerical code stored in the memory of the luggage tag. Thus, storing the alphanumerical code on the luggage tag removes the line-of-sight requirement inherent to barcode/QR/print reading. Thus, the luggage tag is more robust against physical degradation, particularly relevant for a reusable multi-journey tag. Further, if the print becomes worn, soiled or torn, the alphanumerical code remains retrievable from the memory. Since the printed alphanumerical code and the alphanumerical code 1200 stored in the memory of the luggage tag 1000, 2000 both originate from the same generation step 3100, the two representations can be compared against one another, for instance during manufacturing quality control, such that a mismatch between them, for instance due to a printing error, is in principle detectable. Storing the alphanumerical code 1200 electronically further allows it to be retrieved even if the luggage tag 1000, 2000 is not visually accessible, for instance where it is oriented away from a reader or obscured by other luggage on a conveyor. Providing the alphanumerical code 1200 both in printed form and in the memory of the luggage tag 1000, 2000 additionally provides redundancy across the heterogeneous mix of equipment deployed at different airports and by different airlines, for instance a device lacking RFID/NFC reading capability can still rely on the printed alphanumerical code 1200, while a device lacking optically scanning capability can still rely on the memory-stored alphanumerical code 1200.

At step 3500, optionally, the method 3000 further comprises checking whether the alphanumerical code and/or the associated transponder ID, TID, are already stored on the server. This prevents two luggage tags from sharing the same alphanumerical code and prevents two luggage tags from sharing the same TID. This further allows catching a manufacturing defect, cloned tags, or file-handling error in the exchange with the chip manufacturer as described with respect to figures 4A-C. Further, this check ensures the uniqueness of the alphanumerical code - TID pairs stored on the server. Further, by checking the alphanumerical code and/or the TID errors introduced during multi-party manufacturing chain can be detected early. Because the process described with respect to figures 4A-C may involve alphanumerical code generation, export to a chip/tag manufacturer, chip programming, and import of the resulting pairs back to the server, there are multiple points where a file-handling mistake for instance, accidentally re-submitting an already-processed batch, or a manufacturing error reusing a chip could introduce a duplicate. Checking at the point of storage catches this before the tag reaches the market, rather than only when a customer later encounters a conflict. Avoiding such a duplicate additionally reduces the risk of downstream verification failures, for instance an incorrect owner's contact information being retrieved for a scanned luggage tag 1000, 2000 during a registration, self-check-in or lost-and-found procedure that relies on a unique alphanumerical code 1200-TID pair. Further, since this check 3500 can be applied irrespective of which chip manufacturer or production batch a given alphanumerical code 1200-TID pair originates from, it operates as a uniform quality-assurance gate across a potentially multi-vendor, multi-batch supply chain.

At step 3600, the method 3000 comprises optionally printing the alphanumerical code on the luggage tag. For example, the alphanumerical code may be printed on the luggage tag in clear form and/or as graphical code, such as a QR code. This allows the user or a third party, for instance a staff of an airline, to quickly capture and check-up the alphanumerical code as identifier of the luggage tag. Further, due to printing, the alphanumerical code survives even where the wireless-readable tags are powered down, damaged, or read without RFID/NFC infrastructure, for instance in manual handling or at older airports. A printed alphanumerical code can also be captured by conventional means beyond RFID/NFC, for instance visually or by OCR methods, broadening the range of compatible identification methods without changing the electronics. Since the printed alphanumerical code is the same one paired with the TID and stored on the server, there is a single consistent identifier across all channels, avoiding today's confusion between LPN, TID and barcode data. Further, printing the alphanumerical code 1200 on the luggage tag 1000, 2000 is generally a simpler and less costly manufacturing step than writing the alphanumerical code 1200 into a memory of the wireless-readable tag 1100, such that a variant of the luggage tag 1000, 2000 carrying only the printed alphanumerical code 1200 can be manufactured at a lower cost.

Further, at step 3700 optionally attaching means are implemented. The attaching means are configured to enable a connection between the luggage tag and a luggage. For example, the luggage tag may be manufactured as a removable hangtag that can be moved between bags for different journeys. Thus, the attaching means allow the luggage tag to be used with different pieces of luggage. Alternatively, the luggage tag is implemented as an integral part of the luggage. Since the luggage tag is an integral part of the luggage, the luggage can be easily checked-in and transported during a flight of the user taking full advantage of the wireless technology, for instance scanning and sorting the luggage by using the luggage tag. Further, recovery of a lost luggage can be enabled more easily because the luggage tag does not get lost and is securely fixed to the luggage.

At step 3800, optionally, information related to a model of the luggage in association with the alphanumerical code and/or the TID is stored on the server. The information related to the model of the luggage helps to identify the luggage of the user. This information can include descriptive codes found in the IATA Baggage Identification Chart or other future identification systems. This is in particular advantage to identify the lost luggage if the luggage gets lost. Further, the information can be used to quickly identify the luggage such as when the luggage needs to be removed from a plane because the passengers did not show up or during a security screening of the luggage. The information related to a model of the luggage is also stored on the server. For example, the information may be stored in a file next to the alphanumerical code and the associated TID. In an embodiment, the information related to the model of the luggage is a picture of the luggage. For example, the picture of the luggage may be a generic picture of the luggage model provided by a luggage manufacturer. This allows for fast and simple luggage identification and further facilitates locating luggage that is to be off-loaded from an airplane due to a no-show passenger and facilitates the lost-and-found process. Additionally or alternatively, the information stored in association with the alphanumerical code 1200 and/or the TID at step 3800 may comprise manufacturing information, for instance an identifier of the production factory, a production date and/or time, a production line identifier and/or a production contract number, such that a quality issue reported for a specific luggage tag 1000, 2000 can be traced back to its production origin.

Further, at step 3900 the method 3000 optionally comprises registering the luggage tag by the user, such that contact information of the user is associated with the alphanumerical code. This allows to contact the user if the luggage tag is found. For example, if the luggage of the user gets lost, the user may be contacted by the contact information associated with the alphanumerical code of the luggage tag of the luggage. In an embodiment, the contact information of the user and the associated alphanumerical code is stored in a local server. The local server may be a different server than the server. For instance, if the user registers the contact information in the US, the contact information is stored in a local server located in the US. In other words, the contact information is stored in a jurisdiction of the user. Thanks to this local storage of the contact information, the method complies with local privacy requirements. In an embodiment, the contact information could comprise a name and/or a phone number and/or an e-mail address and/or a WhatsApp number, and/or a WeChat contact. For example, the owner or user of the luggage tag may be contacted by, for instance, email.

The step of registering at step 3900 optionally comprises the steps of step 3910, 3920, 3930 and 3940. At step 3910, the alphanumerical code is provided. For instance, the user may provide the alphanumerical code by entering the alphanumerical code in a graphical user interface GUI, for instance a smartphone, tablet, notebook, etc., connected to the server. At step 3920, it is checked whether the provided alphanumerical code has been previously registered. This centralized checking at the server ensures that the luggage tag is only associated to one user in the system, independently of where the user resides. Additionally, it can be further checked if the provided alphanumerical code matches an alphanumerical code stored in a database of the server and/or if the provided alphanumerical code is associated with a TID. Then, if it is determined that the alphanumerical code has not been previously registered, the contact information is provided at step 3930. For instance, only if the provided alphanumerical code has not been registered, the user is able to provide the contact information via the GUI. At step 3940, the local server is identified based on the contact information. For instance, when the user provides a German phone number, the local server can be identified as being located in Germany. This allows for an easy identification of the local server. Additionally, a geographical indication of the local server may be stored in the server. The geographical indication indicates the location of the local server which is used to retrieve the contact information stored in the local server. Alternatively or additionally, a server ID of the local server may be stored on the server. In other words, the server, for instance the server of a company, stores an indication of the local server, while the local server stores the alphanumerical code with the associated contact information.

Figure 5 schematically illustrates a registration procedure. For example, the registration as described with respect to step 3900 of figure 3. A user 4100 provides the alphanumerical code by entering the alphanumerical code in a GUI of a computing device 4600, for instance a smartphone or notebook or computer, etc. The computing device 4600 is connected to the server 4200. Further, the local server 4205 is connected to the company server 4200. The connection may be a wireless connection via a cloud or internet. The server 4200 is configured to check if the provided alphanumerical code has been already registered. Additionally, the server 4200 may be configured to check if the provided alphanumerical code matches an alphanumerical code stored in the database of the server 4200. Additionally, the server 4200 may be configured to check whether the provided alphanumerical code has a corresponding TID record in the database. Then, if it is determined that the alphanumerical code has not been previously registered, the user 4100 may provide contact information via the GUI of the computing device 4600. For example, the user 4100 may provide an email address as contact information. Based on the contact information the local server 4205 is identified. Then, the server 4200 sends the alphanumerical code and the associated contact information to the local server 4205. The alphanumerical code and the associated contact information are then stored on the local server 4205. Further, an indication of the local server 4205 is stored on the server 4200 which is used to retrieve the contact information. For example, the indication may be stored in the file 4220 next to the alphanumerical code and the associated TID. In other words, the indication helps to determine on which local server the contact information in association with the alphanumerical code and/or TID is stored. The indication may be a geographical indication or a server ID.

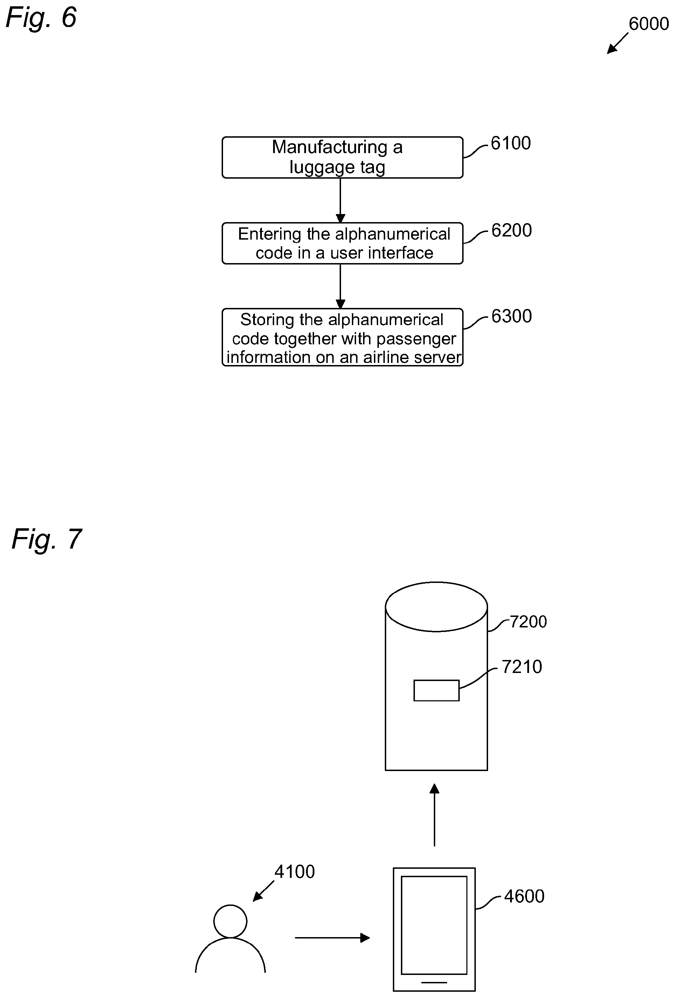

Figure 6 schematically illustrates a method 6000 for checking in luggage for a flight.

At step 6100, a luggage tag is manufactured as disclosed herein. For example, the luggage tag may be manufactured by method 3000 as described with respect to figure 3. For instance, the luggage tag 1000 of figure 1 or 2000 of figure 2 may be manufactured at step 6100.

At step 6200, the method 6000 comprises entering the alphanumerical code in a user interface provided by an airline. The user interface may be depicted, for example, by a smartphone or notebook or laptop or desktop computer, etc. For example, the user may enter the alphanumerical code on a website of the airline or in an App of the airline. In an embodiment, the alphanumerical code is entered in the user interface manually by the user. For example, the user may optically read the alphanumerical code with his eyes and enter the depicted alphanumerical code into the user interface. Alternatively, the alphanumerical code may be entered in the user interface by wireless scanning of the wireless-readable tag. For example, the user may wirelessly scan the wireless-readable tag 1100 of the luggage tag 1000 or 2000, for instance with an NFC reader of a smartphone. Alternatively, the alphanumerical code may be entered in the user interface by optically scanning a graphical-code version of the alphanumerical code. For example, the user may scan the graphical code version 1300, for instance a QR code, of the alphanumerical code 1200 with a camera of a smartphone. Further, the alphanumerical code may be already prestored in the airline server such that the user may select the prestored alphanumerical code depicted by the user interface of the airline. For example, the alphanumerical code 1200 may be prestored in association with a frequent flyer profile of the user 4100 with the airline, such that the user 4100 may select a previously registered luggage tag 1000, 2000 from a list associated with the frequent flyer profile, instead of entering the alphanumerical code 1200 anew for each flight.

At step 6300, the method 6000 comprises storing the alphanumerical code together with passenger information on an airline server. The passenger's information may comprise a flight number, a destination airport, a departure airport, a connection airport, etc. Further, the alphanumerical code together with passenger information may be stored in a baggage source message BSM in a departure control system DCS such that the luggage including the luggage tag is handled, directed and sorted in accordance with the BSM including the alphanumerical code. The BSM may, for example, be structured in accordance with IATA standards, and may be communicated using an XML-based data format; the large number of unique alphanumerical codes 1200 available, compared with the limited and frequently duplicated legacy LPN, facilitates identifying a specific piece of luggage unambiguously within such a message, including across different airlines and systems.

The method 6000 for checking in luggage can be performed as self-check-in at an airport or off an airport. If the luggage is checked in off the airport, the alphanumerical code is stored with the passenger information in the BSM and a status of the BSM is set to be inactive. At the airport, the alphanumerical code of the luggage tag is read optically via the printed alphanumerical code or wirelessly via the wireless-readable tag at a self-baggage dropoff or a manned counter. Based on the alphanumerical code the status of the BSM in the DCS is changed to active such that the luggage of the luggage tag is handled and directed by a baggage handling system BHS based on the BSM, i.e. the alphanumerical code and the passenger's information. If the luggage is checked in directly at the airport, the alphanumerical code is directly added to the BSM in the DCS of the luggage with the status of the BSM being active directly.

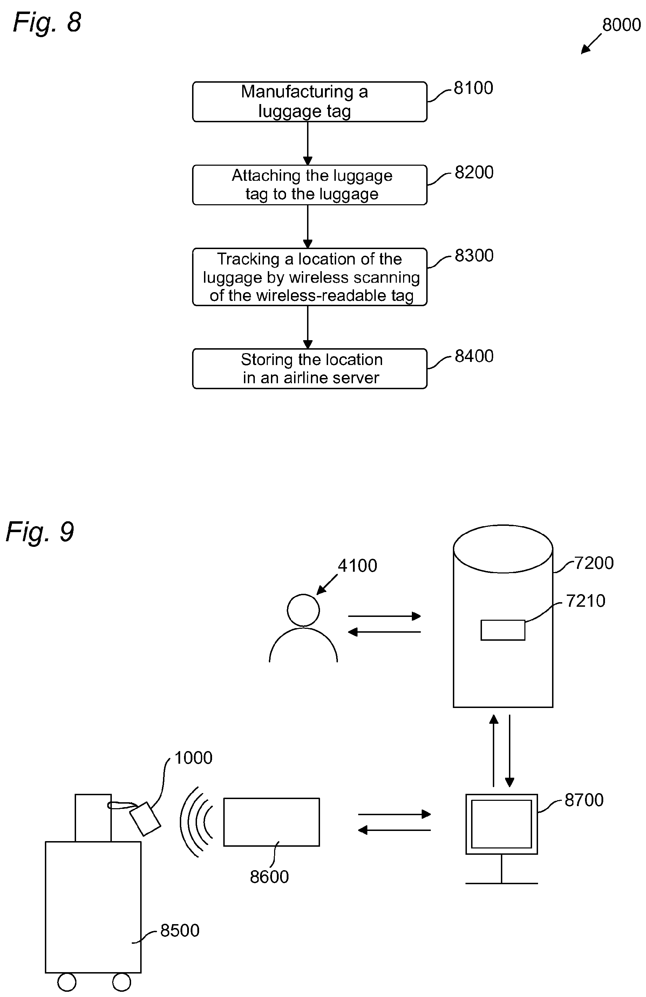

The method 6000 of checking in luggage allows the airline to handle the luggage by using the alphanumerical code instead of printing a baggage tag. Further, since the alphanumerical code is scannable by the wireless-readable tag, location data of the luggage can be provided to the user by the airline. Since the alphanumerical code is used, storing location against the code means airline staff, lost-and-found processes, and passenger-facing systems can all query using the alphanumerical code. Further, the luggage tag is reusable across multiple journeys without re-issuing a new alphanumeric code per trip because the code is permanent. This avoids generating a new code and new tag for every flight, resulting in less waste production. This is of particular relevance since, for instance under IATA Resolution 753, airlines are required to track checked baggage at each of a plurality of core tracking points, namely check-in acceptance, loading onto the aircraft, transfer between flights and delivery to the passenger upon arrival. Since the alphanumerical code 1200 is a single, permanent identifier already established at manufacture of the luggage tag 1000, 2000, data recorded at each of these tracking points can be reliably aggregated, under the same alphanumerical code 1200, into one continuous record for the same piece of luggage, including across multiple future journeys. As with the tracking method described further below with respect to figures 8 and 9, the passenger and location data stored on the airline server 7200 in association with the alphanumerical code 1200 is kept separate from the alphanumerical code 1200-TID pairing data stored on the server 4200, such that operational data and authenticity data are maintained in different systems.

Figure 7 schematically illustrates communication while checking in luggage. For example, figure 7 illustrates the communication of method 6000 of figure 6. The user 4100 enters the alphanumerical code of the manufactured luggage tag, for instance the luggage tag 1000 or 2000 in a user interface provided by an airline. The user interface may be depicted by a computing device 4600. For instance, the user interface may be a website or app of the airline depicted by a smartphone or notebook or laptop or desktop computer, etc. Further, the user may also enter passenger information, for instance flight number, passport number, name, in the user interface. The entered alphanumerical code together with the passenger information is then sent to the server 7200 of the airline and stored, for instance, on a database 7210 of the airline server 7200.

Figure 8 schematically illustrates a method 8000 for tracking luggage for a flight.

At step 8100, a luggage tag is manufactured as disclosed herein. For example, the luggage tag may be manufactured according to method 3000. The manufactured luggage tag may be the luggage tag 1000 or 2000.

At step 8200, the luggage tag may be attached to the luggage of the user. For instance, the attaching means 1400 implemented at step 3700 may be used to connect the luggage tag 1000 or 2000 to the luggage. Alternatively, the luggage tag may be implemented as integral part of the luggage.

At step 8300, a location of the luggage is tracked by wireless scanning of the wireless-readable tag. For example, the wireless-readable tag 1100 of the luggage tag 1000 or 2000 may be scanned by a wireless reader to determine its location of the wireless-readable tag 1100. For example, the alphanumerical code stored on the wireless-readable tag may be used to associate a location of the wireless-readable tag with the location of the luggage. Thus, the alphanumerical code may be used to track the location of the luggage.

At step 8400, the location of the luggage is stored in an airline server. The location storage on the airline server, associated with the alphanumerical code, may allow the airline to obtain operational tracking data. The location or tracking data may then be provided to the user of the luggage tag, for instance, via an app of the airline or a push-notification. Further, storing the location against the alphanumerical code facilitates lost-and-found processes as well as baggage handling processes. The tracking data of the luggage tag are kept separately form the alphanumerical code TID association. Thus, only the airline server stores tracking data or the location and not the server on which the TID - alphanumerical code pairs are stored. The location stored on the airline server 7200 may, for example, comprise a loading position of the luggage 8500, for instance an identifier of a cart, unit load device, ULD, bin or aircraft hold in which the luggage 8500 is placed. Combined with the picture of the luggage stored at step 3800 and the last characters of the alphanumerical code 1200, this facilitates rapid physical identification and retrieval of a specific piece of luggage 8500, for instance when off-loading the luggage 8500 of a no-show passenger.

Figure 9 schematically illustrates communication during tracking luggage. For instance, figure 9 illustrates communication associated with the method 8000 for tracking luggage 8500 for a flight. A luggage tag 1000, i.e. the luggage tag 1000 of figure 1 or the luggage tag 2000 of figure 2, is attached to a bag or luggage 8500. The wireless-readable tag 1100 of the luggage tag 1000 may be scanned by a wireless reader 8600 to obtain the alphanumerical code stored on a memory of the luggage tag 1000. The obtained alphanumerical code can be sent from the wireless reader 8600 to a computing device 8700. The computing device 8700 is connected to an airline server 7200 of an airline. The wireless reader 8600 sends location information along with the obtained alphanumerical code to the computing device 8700. Further, the location information of the luggage 8500 is stored on the airline server 7200 and may be communicated to the user or owner 4100 of the luggage 8500. For example, the airline server 7200 may send a message to a mobile device of the user 4100 informing the user 4100 that the luggage 8500 has been successfully loaded/unloaded on/off the airplane. In an embodiment, the luggage 8500 is tracked along one or more checkpoints during an airflight of the user, wherein each one of the one or more checkpoints comprises a wireless reader 8600 that scans the wireless-readable tag 1100 of the luggage tag 1000 or 2000 attached to the luggage 8500. This allows to intermittently or constantly track the luggage 8500 of the user 4100. In an embodiment, the one or more checkpoints comprise checking-in the luggage and/or loading the luggage on an airplane and/or unloading the luggage off an airplane and/or delivering the luggage to a luggage claim area. The one or more checkpoints may also comprise loading the luggage on an airplane of a transfer flight.

Further, the computing device 8600 may retrieve baggage sorting information associated with the alphanumerical code from the airline server 7200. For instance, the baggage sorting information may be a BSM in a DCS of the airline stored in a database 7210 of the airline server 7200. Thus, the computing device 8700 may retrieve the BSM that includes the alphanumerical code of the luggage tag 1000 such that the luggage 8500 is handled by a baggage handling system in accordance with the BSM.

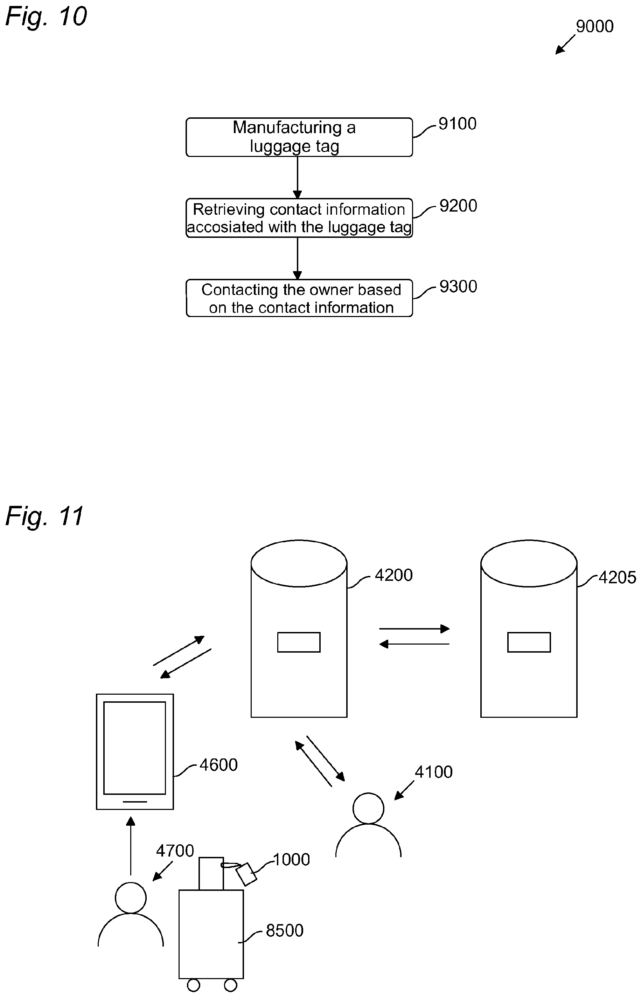

Figure 10 schematically illustrates a method 9000 for identifying an owner of a luggage.

The method 9000 comprises, at step 9100, manufacturing the luggage tag as disclosed herein. For example, the luggage tag may be manufactured by the method 3000, in particular step 3900 of method 3000. The manufactured luggage tag may be the luggage tag 1000 or 2000.

At step 9200, contact information associated with the luggage tag is retrieved. For example, the contact information stored on the server 4205 may be retrieved.

At step 9300, the method further comprises contacting the owner based on the contact information. For example, a finder of the luggage tag may provide the alphanumerical code depicted on the luggage tag, for instance via a graphical user interface. Then, the server on which the alphanumerical code is stored retrieves the contact information. For instance, the contact information may be retrieved from a local server on which the contact information is stored. Then, the server may contact the owner of the luggage based on the contact information. Alternatively, an employee may contact the owner based on the contact information. Additionally or alternatively, the contact information may be directly used by the finder of the luggage to contact the owner of the luggage. For instance, a phone number may be provided directly to the finder upon providing the alphanumerical code such that the finder may contact the owner via a phone number or an SMS. For instance, the finder may provide location information of the luggage to the user via the contact information. If the luggage gets lost during a flight , a lost and found office of an airline may contact the owner based on the contact information. For example, the lost and found office of the airline may provide a message with location information of the luggage. Alternatively, or additionally, a finder may obtain the alphanumerical code 1200 by wirelessly scanning the wireless-readable tag 1100 of the luggage tag 1000, 2000, for instance by tapping an NFC-enabled smartphone against the luggage tag 1000, 2000, which may automatically direct the finder's computing device 4600 to a reporting interface for entering the finder's message, without the finder needing to manually type the alphanumerical code 1200.

Figure 11 illustrates communication for found luggage. For example, figure 11 illustrates communication of the method 9000 of figure 10. A finder 4700 of a luggage tag 1000 (or 2000) of a found luggage 8500may enter the alphanumerical code of the luggage tag 1000 in a computing device 4600. For example, the finder 4700 may be a baggage service agent. Alternatively, the finder 4700 may provide the alphanumerical code of the luggage tag 1000 by scanning the luggage tag 1000, e.g. the wireless-readable tag of the luggage tag 1000. Then, based on the entered the alphanumerical code an indication is retrieved, the indication being indicative of the local server 4205 on which the contact information is stored. Based on the indication, the contact information is retrieved from the local server 4205. Then, the server 4200 may contact the owner 4100 of the luggage based on the contact information. For example, the server 4200 may send a message to the owner 4100 with a notification that the lost luggage has been found and with information about how to recover the lost luggage or where to find it. For example, the server 4200 may send a message to the owner 4100 with specific information about the airport and airline where the luggage 8500 is located right now. For example, the message could inform the owner 4100 that the luggage 8500 is with airline ABC at airport XYZ. Alternatively, the server 4200 may forward a message of the finder 4700 with information about how to recover the lost luggage. Then, the owner 4100 may forward a message to the finder 4700 over the server 4200 to inform the finder 4700 where to send the luggage 8500. Additionally, the alphanumerical code may be entered into an industry lost-and-found system, for instance WorldTracer, in a field of a report of an unclaimed luggage; the system may then communicate on-hand-record details to the owner 4100 via the server 4200. Thus, the alphanumerical code may be used if the owner 4100 has lost the luggage 8500, for instance due to delay of the luggage 8500, also called advise if hold (AHL) or if a finder 4700 has found the luggage 8500, also called on hand (OHD).

In various embodiments above, the alphanumerical code 1200 has been described as being implemented by the luggage or baggage ID, BID. It will be clear to those skilled in the art that the alphanumerical code 1200 can also be implemented by the transponder ID, TID, by a combination of both, or by a code based on one or both of them.

While the embodiments above have been described and illustrated with a plurality in each embodiment, not all of those features need to be necessarily implemented together for the mere fact that they have been described, or illustrated, together. To the contrary, it will be clear to the skilled person that any of the features described above can be implemented in combination with any other feature described above, even if described indifferent embodiments.

### List of reference numerals

1000: luggage tag
1100: wireless-readable tag
1110: antenna
1120: microchip
1200: alphanumerical code
1300: graphical-code version
1400: attaching means
2000: luggage tag
1500: screen
3000: method for manufacturing a luggage tag for
3100: generating step
3200: associating step
3300: storing step
3400: storing step
3500: checking step
3600: printing step
3700: implementing step
3800: storing step
3900: registering step
3910: providing step
3920: checking step
3930: providing step
3940: identifying step
4100: user
4200: server
4205: local server
4220: file
4600: computing device
4700: finder of the luggage
4800: administrator
6000: method for checking in luggage
6100: manufacturing step
6200: entering step
6300: storing step
7200: airline server
7210: database on airline server
8000: method for tracking luggage
8100: manufacturing step
8200: attaching step
8300: tracking step
8400: storing step
8500: luggage
8600: wireless reader
8700: computing device
9000: method for identifying an owner of a luggage
9100: manufacturing step
9200: retrieving step
9300: contacting step

## Claims

1. A method (3000) for manufacturing a luggage tag (1000, 2000) for tracking luggage of a user (4100), the luggage tag (1000, 2000) having a wireless-readable tag (1100), the method (3000) comprising:
generating (3100) an alphanumerical code (1200) for the luggage tag (1000, 2000),
associating (3200) the alphanumerical code (1200) with a transponder ID, TID, stored in a non-erasable manner on the luggage tag (1000, 2000),
storing (3300) the alphanumerical code (1200) and the associated transponder ID, TID, on a server (4200).

2. The method (3000) according to claim 1, further comprising:
printing (3600) the alphanumerical code (1200) on the luggage tag (1000, 2000).

3. The method (3000) according to any previous claim further comprising:
storing (3400) the alphanumerical code (1200) in a memory of the luggage tag (1000, 2000).

4. The method (3000) according to any previous claim further comprising:
checking (3500) whether the alphanumerical code (1200) and/or the associated transponder ID, TID, are already stored on the server.

5. The method (3000) according to any previous claim, wherein
the alphanumerical code (1200) depicted on the luggage tag (1000, 2000) comprises a first part and a second part,
the first part comprises at least four characters, preferably at least five characters, even more preferably at least six characters,
the second part comprises at most six characters, preferably at most five characters, even more preferably at most four characters.

6. The method (3000) according to any previous claim further comprising,
implementing (3700) the luggage tag (1000) as an integral part of the luggage.

7. The method (3000) according to any previous claim further comprising:
storing (3800) information related to a model of the luggage in association with the alphanumerical code (1200) and/or the associated transponder ID, TID, on the server (4200).

8. The method (3000) according to any previous claim, wherein generating (3100) the alphanumerical code (1200) comprises:
applying a format-preserving encryption to a sequential input value using a symmetric key, such that the alphanumerical code (1200) does not reveal a position of the sequential input value in a sequence of input values.

9. The method (3000) according to any previous claim, further comprising:
registering (3900) the luggage tag (1000, 2000) by the user (4100), such that contact information of the user (4100) is associated with the alphanumerical code (1200).

10. A method (6000) for checking in luggage for a flight, the method (6000) comprising:
manufacturing a luggage tag (1000, 2000) according to any of claims 1 to 9,
entering the alphanumerical code (1200) in a user interface provided by an airline,
storing the alphanumerical code (1200) together with passenger information on an airline server (7200).

11. The method (6000) according to claim 10,
wherein the alphanumerical code (1200) is entered in the user interface by optically scanning a graphical-code version of the alphanumerical code (1200), or
wherein the alphanumerical code (1200) is entered in the user interface by wireless scanning of the wireless-readable tag (1100).

12. A method (8000) for tracking luggage (8500) for a flight, the method (8000) comprising:
manufacturing (8100) the luggage tag (1000, 2000) according to any of claims 1 to 9,
attaching (8200) the luggage tag (1000, 2000) to the luggage (8500) of the user (4100),
tracking (8300) a location of the luggage (8500) by wireless scanning of the wireless-readable tag (1100),
storing (8400) the location of the luggage (8500) in an airline server (7200).

13. The method (8000) according to claim 12,
wherein the luggage (8500) is tracked along one or more checkpoints during an airflight of the user (4100), wherein each one of the one or more checkpoints comprises a wireless reader (8600) that scans the wireless-readable tag (1100) of the luggage tag (1000, 2000) attached to the luggage (8500).

14. A method (9000) for identifying an owner of a luggage, the method (9000) comprising:
manufacturing (9100) the luggage tag (1000, 2000) according to claim 9,
retrieving (9200) the contact information associated with the luggage tag (1000, 2000),
contacting (9300) the owner based on the contact information.

15. A luggage tag (1000, 2000) manufactured according to any of claims 1 to 9.
